# EUROPÄISCHE PATENTANMELDUNG

(11) **EP 0 798 347 A1**
(43) Veröffentlichungstag der Anmeldung: **01.10.1997**
(21) Anmeldenummer: 97104488.8
(22) Anmeldetag: 17.03.1997
(51) Int. Cl.: C09B 62/51

(54) **Reaktive Monoazofarbstoffe mit einer Diazokomponente aus der Reihe der 5-substituierten Sulfanilsäuren**

(30) Priorität: 25.03.1996 DE 19611667
(71) Anmelder: BASF AKTIENGESELLSCHAFT, 67056 Ludwigshafen (DE)
(72) Erfinder: Zamponi, Andrea, Dr., 69124 Heidelberg (DE); Patsch, Manfred, Dr., 67157 Wachenheim (DE)

(57) **Zusammenfassung**

Reaktivfarbstoffe der allgemeinen Formel I 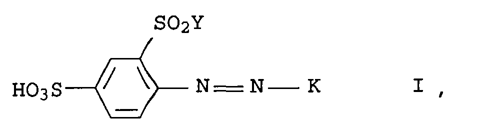 in der
- Y: Vinyl oder einen Rest der Formel C₂H₄Q, worin Q für eine unter alkalischen Reaktionsbedingungen abspaltbare Gruppe steht,
und
- K: den Rest einer Kupplungskomponente ohne heterocyclischen Ankerrest bedeutet,
sowie ihre Verwendung zum Färben oder Bedrucken von Hydroxygruppen oder Stickstoffatome aufweisenden organischen Substraten.

## Beschreibung

Die vorliegende Erfindung betrifft neue Reaktivfarbstoffe der Formel I 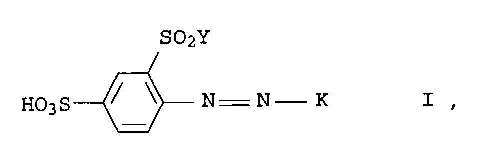 in der
- Y: Vinyl oder einen Rest der Formel C₂H₄Q, worin Q für eine unter alkalischen Reaktionsbedingungen abspaltbare Gruppe steht,
und
- K: den Rest einer Kupplungskomponente ohne heterocyclischen Ankerrest bedeutet,
mit der Maßgabe, daß 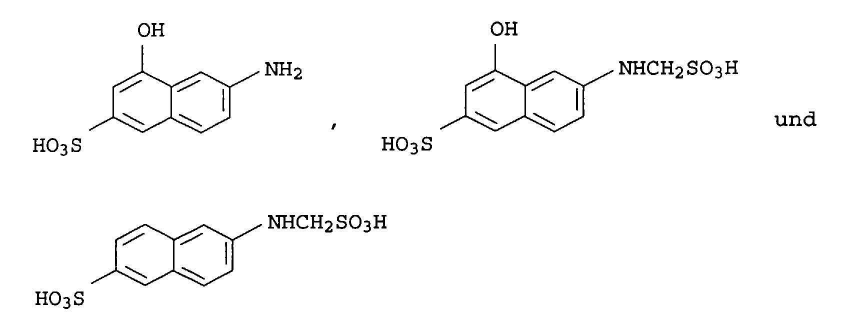 als Kupplungskomponenten ausgeschlossen sind,
sowie ihre Verwendung zum Färben oder Bedrucken von Hydroxygruppen oder Stickstoffatome aufweisenden organischen Substraten.

Aus der EP-A 567 036 sind Hydroxysulfonylphenylazofarbstoffe mit Anilinen als Kupplungskomponente, die an der Aminogruppe mit einem Diazin- oder Triazinanker verknüpft sind, bekannt.

Weiterhin beschreibt die EP-A 637 615 Hydroxysulfonylphenylazofarbstoffe mit 2-Amino-8-naphthol-6-sulfonsäure als Kupplungskomponente, die in der 1-Position gekuppelt wurden. Diese Farbstoffe weisen schlechte Löslichkeit sowie schlechte Wasch- und Peroxidechtheiten auf.

Die EP-A 559 617 beschreibt Monoazofarbstoffe, deren Diazokomponente sich von 2-β-Sulfatoethylsulfonyl-5-sulfoanilin ableitet.

Schließlich sind aus der älteren Patentanmeldung DE-A 44 34 989 Hydroxysulfonylphenylazonaphthalinfarbstoffe bekannt, deren Kupplungskomponente die 2-Hydroxysulfonylmethylamino-6-sulfonsäure oder die 2-Hydroxysulfonylmethylamino-8-hydroxy-6-sulfonsäure ist.

Aufgabe der vorliegenden Erfindung war es, neue Reaktivfarbstoffe, die sich von 4-Hydroxysulfonylphenylazofarbstoffen ableiten, bereitzustellen. Die neuen Farbstoffe sollten sich durch ein vorteilhaftes anwendungstechnisches Eigenschaftsprofil auszeichnen.

Demgemäß wurden die eingangs näher bezeichneten Reaktivfarbstoffe der Formel I gefunden sowie ihre Verwendung zum Färben oder Bedrucken von Hydroxygruppen oder Stickstoffatome aufweisenden organischen Substraten.

Die neuen Reaktivfarbstoffe der Formel I sind jeweils in Form der freien Säure angegeben. Selbstverständlich werden auch deren Salze von den Patentansprüchen umfaßt.

Geeignete Kationen leiten sich von Metall- oder Ammoniumionen ab. Metallionen sind insbesondere die Lithium-, Natrium- oder Kaliumionen. Unter Ammoniumionen im erfindungsgemäßen Sinne sind unsubstituierte oder substituierte Ammoniumkationen zu verstehen. Substituierte Ammoniumkationen sind z.B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkypiperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch 1 oder 2 Hydroxylgruppen substituiert und/oder durch 1 bis 4 Sauerstoffatome in Etherfunktion unterbrochen sein kann.

Der Rest Q steht für eine unter alkalischen Reaktionsbedingungen abspaltbare Gruppe. Solche Gruppen sind z.B. Chlor, Brom, C₁-C₄-Alkylsulfonyl, Phenylsulfonyl, OSO₃H, SSO₃H, OP(O)(OH)₂, C₁-C₄-Alkylsulfonyloxy, Phenylsulfonyloxy, C₁-C₄-Alkanoyloxy, C₁-C₄-Dialkylamino oder ein Rest der Formel 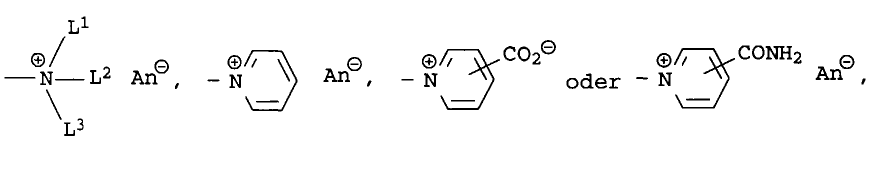 wobei L¹, L² und L³ unabhängig voneinander jeweils die Bedeutung von C₁-C₄-Alkyl oder Benzyl und An^{⊖} jeweils die Bedeutung eines Äquivalents eines Anions besitzen. Als Anionen können dabei z.B. Fluorid, Chlorid, Bromid, Iodid, Mono-, Di- oder Trichloracetat, Methansulfonat, Benzolsulfonat oder 2- oder 4-Methylbenzolsulfonat in Betracht kommen.

Bevorzugt sind als Reste Y die Reste der Formeln -C₂H₄SSO₃H, -C₂H₄Cl, -C₂H₄OCOCH₃ sowie besonders -C₂H₄OSO₃H und der Vinylrest.

Die Reste SO₂Y sind aliphatische Ankerreste. Dabei versteht man allgemein unter Ankerresten solche Reste, die mit den Hydroxygruppen oder Stickstoffatome enthaltenden Gruppen der zu behandelnden Substrate substitutiv oder additiv reagieren.

Daß der Ankerrest mit den betreffenden Gruppen in den Substraten, z.B. mit den Hydroxygruppen der Cellulose, substitutiv reagiert, bedeutet, daß die Austrittsgruppen oder -atome (z.B. Fluor oder Chlor) im Ankerrest durch die Hydroxygruppen der Cellulose gemäß folgendem Schema substituiert werden:

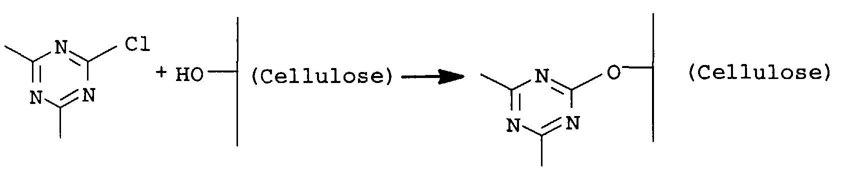

Daß der Ankerrest mit betreffenden Gruppen in den Substraten, z.B. mit Hydroxygruppen der Cellulose, additiv reagiert, bedeutet, daß die Hydroxygruppen der Cellulose gemäß folgendem Schema an den Ankerrest addiert werden:

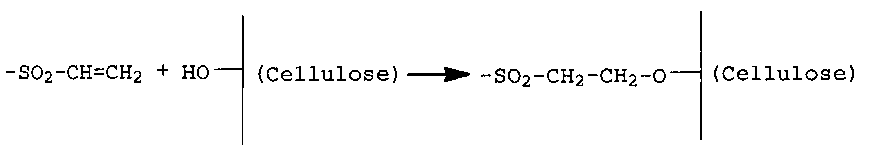

Ankerreste aus der aliphatischen Reihe sind weiterhin beispielsweise Acryloyl-, Mono-, Di- oder Trichloracryloyl, Mono-, Di- oder Tribromacryloyl, -CO-CCl=CH-COOH, -CO-CH=CCl-COOH, 2-Chlorpropionyl, 1,2-Dichlorpropionyl, 1,2-Dibrompropionyl, 3-Phenylsulfonylpropionyl, 3-Methylsulfonylpropionyl, 2-Sulfatoethylaminosulfonyl, 2-Chlor-2,3,3-trifluorcyclobutylcarbonyl, 2,2,3,3-Tetrafluorcyclobutylcarbonyl, 2,2,3,3-Tetrafluorcyclobutylsulfonyl, 2-(2,2,3,3-Tetrafluorcyclobutyl)acryloyl, 1- oder 2-Alkyl- oder 1- oder 2-Arylsulfonylacryloyl, wie 1- oder 2-Methylsulfonylacryloyl oder ein Rest der Formel CONH-L⁴-SO₂-Y oder NHCONH-L⁴-SO₂-Y, worin Y die obengenannte Bedeutung besitzt und L⁴ für C₁-C₄-Alkylen oder Phenylen steht.

Heterocyclische Ankerreste sind z.B. halogensubstituierte Reste, die sich vom 1,3,5-Triazin, Chinoxalin, Phthalazin, Pyrimidin, Pyridazon oder dem 2-Alkylsulfonylbenzthiazol als heterocyclischen Grundkörper ableiten.

K in Formel I stellt den Rest einer Kupplungskomponente dar, die frei von heterocyclischen Ankerresten ist, die jedoch gegebenenfalls einen aliphatischen Ankerrest trägt.

Wichtige Kupplungskomponenten HK leiten sich z.B. von Verbindungen aus der Benzol-, Naphthalin-, Pyrazol-, Pyridin-, Pyrimidin-, Indol- oder N-Arylacetoacetamidreihe ab.

Faserreaktivgruppenfreie Kupplungskomponenten entsprechen beispielsweise den Verbindungen der Formeln II a-m 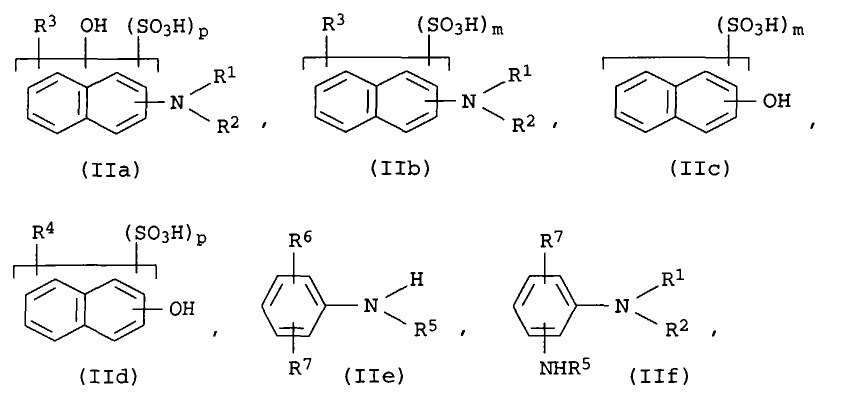 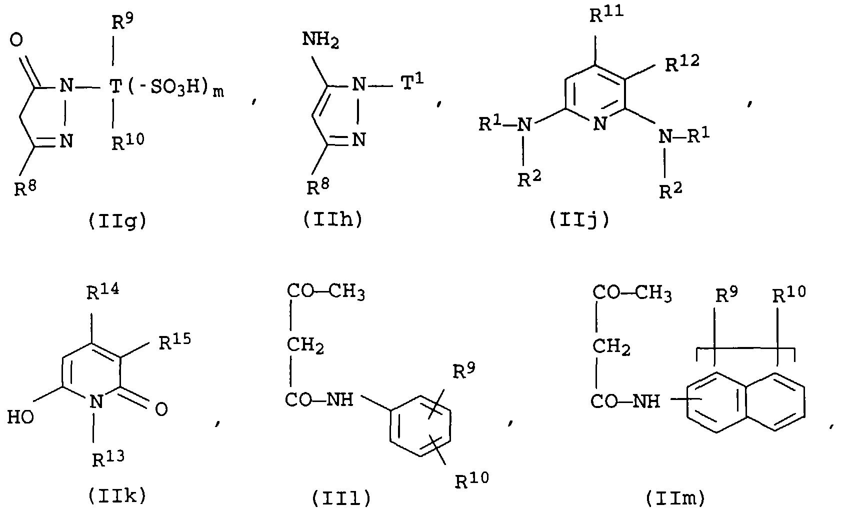 worin
- m: 0, 1, 2 oder 3,
- p: 0, 1 oder 2,
- R¹: Wasserstoff oder C₁-C₄-Alkyl, das durch Hydroxy, Cyano, Carboxyl, Hydroxysulfonyl, Sulfato, Methoxycarbonyl, Ethoxycarbonyl oder Acetoxy substituiert sein kann,
- R²: Wasserstoff, C₁-C₄-Alkyl, das durch Hydroxy, Cyano, Carboxyl, Hydroxysulfonyl, Sulfato, Methoxycarbonyl, Ethoxycarbonyl oder Acetoxy substituiert sein kann, Benzyl oder Phenyl, das durch C₁-C₄-Alkyl, C₁-C₄-Alkoxy, Chlor oder Hydroxysulfonyl substituiert sein kann,
- R³: Wasserstoff oder C₁-C₄-Alkyl, das durch Hydroxysulfonyl oder Carboxyl substituiert sein kann,
- R⁴: C₁-C₆-Alkylureido, Phenylureido, das durch Chlor, Methyl, Methoxy, Nitro, Hydroxysulfonyl oder Carboxyl substituiert sein kann, C₁-C₆-Alkanoylamino, das durch Hydroxysulfonyl oder Chlor substituiert sein kann, Cyclohexylcarbonylamino, Benzoylamino, das durch Chlor, Methyl, Methoxy, Nitro, Hydroxylsulfonyl oder Carboxyl substituiert sein kann, oder Hydroxy,
- R⁵: Wasserstoff, C₁-C₆-Alkyl, insbesondere C₁-C₄-Alkyl, das jeweils durch Phenyl, C₁-C₄-Alkoxy, Hydroxy, Phenoxy oder C₁-C₄-Alkanoyloxy substituiert sein kann, C₅-C₇-Cycloalkyl, Hydroxysulfonylphenyl, C₁-C₄-Alkanoyl, Carbamoyl, Mono- oder Di-C₁-C₄-alkylcarbamoyl, Phenylcarbamoyl oder Cyclohexylcarbamoyl,
- R⁶: C₁-C₄-Alkoxy, Chlor, Brom, Hydroxysulfonyl, C₁-C₄-Alkanoylamino, Amino, Ureido, Methylsulfonylamino, Ethylsulfonylamino, Dimethylaminosulfonylamino, Methylamino, Ethylamino, Dimethylamino oder Diethylamino und
- R⁷: Wasserstoff, C₁-C₄-Alkyl, C₁-C₄-Alkoxy, Hydroxysulfonyl, Chlor oder Brom bedeuten und
- T: den Rest eines Benzol- oder Naphthalinrings,
- T¹: C₁-C₄-Alkyl, Cyclohexyl, Benzyl oder Phenyl, das ein- bis dreifach durch Fluor, Chlor, Brom, Methoxy, Nitro, Hydroxysulfonyl, Carboxyl, Acetyl, Acetylamino, Methylsulfonyl, Sulfamoyl oder Carbamoyl substituiert ist,
- R⁸: Methyl, Carboxyl, C₁-C₄-Alkoxycarbonyl oder Phenyl,
- R⁹: Wasserstoff, C₁-C₄-Alkyl, C₁-C₄-Alkoxy, Acetyl, Cyano, Carboxyl, Hydroxysulfonyl, C₁-C₄-Alkoxycarbonyl, Hydroxy, Carbamoyl, C₁-C₄-Mono- oder Dialkylcarbamoyl, Fluor, Chlor, Brom oder Trifluormethyl,
- R¹⁰: Wasserstoff, C₁-C₄-Alkyl, C₁-C₄-Alkoxy, Cyano, Carboxyl, Hydroxysulfonyl, Acetylamino, C₁-C₄-Alkoxycarbonyl, Carbamoyl, Mono- oder Di-C₁-C₄-alkylcarbamoyl, Fluor, Chlor, Nitro, Sulfamoyl, Mono- oder Di-C₁-C₄-alkylsulfamoyl, C₁-C₄-Alkylsulfonyl, Phenylsulfonyl oder Phenoxy,
- R¹¹: Wasserstoff oder C₁-C₄-Alkyl, das durch C₁-C₄-Alkoxy oder Cyano substituiert sein kann,
- R¹²: Wasserstoff, Methyl, Hydroxysulfonylmethyl, Hydroxysulfonyl, Cyano oder Carbamoyl,
- R¹³: Wasserstoff, C₁-C₄-Alkyl, das durch Phenyl, Hydroxysulfonylphenyl, Hydroxy, Amino, C₁-C₄-Alkoxyl, Carboxyl, Hydroxysulfonyl, Acetylamino, Benzoylamino oder Cyano substituiert sein kann, Cyclohexyl, Phenyl, das gegebenenfalls durch Carboxyl, Hydroxysulfonyl, Benzoylamino, Acetylamino, Methyl, Methoxy, Cyano oder Chlor substituiert ist, oder Amino, das durch Phenyl, C₁-C₄-Alkyl, C₁-C₄-Alkanoyl oder Benzoyl substituiert ist,
- R¹⁴: Wasserstoff, C₁-C₄-Alkyl, Phenyl, Hydroxy, Cyano, Acetyl, Benzoyl, Carboxyl, Methoxycarbonyl, Carbamoyl oder Hydroxysulfonylmethyl und
- R¹⁵: Wasserstoff, Chlor, Brom, Acetylamino, Amino, Nitro, Hydroxysulfonyl, Sulfamoyl, Methylsulfonyl, Phenylsulfonyl, Carboxyl, C₁-C₄-Alkoxycarbonyl, C₁-C₄-Alkanoyl, Benzoyl, Carbamoyl, Cyano oder Hydroxysulfonylmethyl bedeuten.

Reste R¹, R², R³, R⁵, R⁷, T¹, R⁹, R¹⁰, R¹¹, R¹³ und R¹⁴ sind z.B. Methyl, Ethyl, Propyl, Isopropyl, Butyl, Isobutyl, sec-Butyl oder tert-Butyl.

Der Rest R⁵ kann weiterhin Pentyl, Isopentyl, Neopentyl, tert-Pentyl, Hexyl oder 2-Methyl-pentyl sein.

Die Reste R¹, R², R⁵ und R¹³ sind Hydroxy-C₁-C₄-alkyl wie Hydroxymethyl, 1-Hydroxyeth-1-yl, 2-Hydroxyeth-1-yl, 1-Hydroxy-prop-1-yl, 2-Hydroxy-prop-1-yl, 3-Hydroxy-prop-1-yl, 1-Hydroxy-prop-2-yl, 2-Hydroxyprop-2-yl, 1-Hydroxybut-1-yl, 2-Hydroxybut-1-yl, 3-Hydroxybut-1-yl, 4-Hydroxybut-1-yl, 1-Hydroxybut-2-yl, 2-Hydroxybut-2-yl, 1-Hydroxybut-3-yl, 2-Hydroxybut-3-yl, 1-Hydroxy-2-methyl-prop-3-yl, 2-Hydroxy-2-methyl-prop-3-yl, 3-Hydroxy-2-methyl-prop-3-yl, und 2-Hydroxymethyl-prop-2-yl.

Die Reste R¹, R², R¹¹ und R¹³ sind weiterhin z.B. Cyanomethyl, Cyanoethyl, Cyanopropyl oder Cyanobutyl.

Die Reste R¹, R², R³ und R¹³ sind beispielsweise Carboxylmethyl, Carboxylethyl, 2- oder 3-Carboxylpropyl oder 2- oder 4-Carboxylbutyl.

Die Reste R¹, R² und R³ stehen ferner für beispielsweise Hydroxysulfonylmethyl, 2-Hydroxysulfonylethyl, 2- oder 3-Hydroxysulfonylpropyl, 2- oder 4-Hydroxysulfonylbutyl.

R¹ und R² stehen weiterhin für z.B. 2-Sulfatoethyl, 2- oder 3-Sulfatopropyl, 2- oder 4-Sulfatobutyl, Methoxycarbonylmethyl, 2-Methoxycarbonylethyl, 2- oder 3-Methoxycarbonylpropyl, 2- oder 4-Methoxycarbonylbutyl, Ethoxycarbonylmethyl, 2-Ethoxycarbonylethyl, 2- oder 3-Ethoxycarbonylpropyl, 2- oder 4-Ethoxycarbonylbutyl, Acetoxymethyl, 2-Acetoxyethyl, 2- oder 3-Acetoxypropyl, 2- oder 4-Acetoxybutyl.

Die Reste R² können weiterhin z.B. 2-, 3- oder 4-Methylphenyl, 2-, 3- oder 4-Ethylphenyl, 2-, 3- oder 4-Propylphenyl, 2,- 3- oder 4-Isopropylphenyl, 2-, 3- oder 4-Butylphenyl, 2-, 3- oder 4-Isobutylphenyl, 2-, 3- oder 4-sec-Butylphenyl und 2-, 3- oder 4-tert-Butylphenyl, 2-, 3- oder 4-Methoxyphenyl, 2-, 3- oder 4-Ethoxyphenyl, 2-, 3- oder 4-Propyloxyphenyl, 2-, 3- oder 4-Isopropyloxyphenyl, 2-, 3- oder 4-Butyloxyphenyl, 2-, 3- oder 4-Isobutyloxyphenyl, 2-, 3- oder 4-sec-Butyloxyphenyl und 2-, 3- oder 4-tert-Butyloxyphenyl, 2-, 3- oder 4-Chlorphenyl sein.

Die Reste R², R⁵ und T¹ sind weiterhin z.B. 2-, 3- oder 4-Hydroxysulfonylphenyl.

Der Rest R⁴ ist z.B. Methylureido, Ethylureido, Propylureido, Butylureido, Pentylureido, Hexylureido, Formylamino, Acetylamino, Propionylamino, Propylcarbonylamino, Isopropylcarbonylamino, Butylcarbonylamino, Isobutylcarbonylamino, sec-Butylcarbonylamino, tert-Butylcarbonylamino, Pentylcarbonylamino.

Die Reste R⁵ und R¹³ können z.B. Benzyl, 1-Phenylethyl, 2-Phenylethyl, 1-Phenylprop-1-yl, 2-Phenylprop-1-yl, 3-Phenylprop-1-yl, 1-Phenylbut-1-yl, 2-Phenylbut-1-yl, 3-Phenylbut-1-yl, 4-Phenylbut-1-yl, 1-Phenylbut-2-yl, 2-Phenylbut-2-yl, 3-Phenylbut-2-yl, 3-Phenylbut-2-yl, 4-Phenylbut-2-yl, 1-(Phenylmethyl)-eth-1-yl, 1-(Phenylmethyl)-1-(methyl)-eth-1-yl und 1-(Phenylmethyl)-prop-1-yl, vorzugsweise Benzyl und 2-Phenylethyl sein.

Die Reste R⁵, R¹¹ und R¹³ stehen weiter für beispielsweise Methoxymethyl, Ethoxymethyl, n-Propoxymethyl, (1-Methylethoxy)methyl, n-Butoxymethyl, (1-Methylpropoxy)methyl, (2-Methylpropoxy)methyl, (1,1-Dimethylethoxy)methyl, 2-(Methoxy)ethyl, 2-(Ethoxy)ethyl, 2-(n-Propoxy)ethyl, 2-(1-Methoxyethoxy)ethyl, 2-(n-Butoxy)ethyl, 2-(1-Methoxypropoxy)ethyl, 2-(2-Methylpropoxy)ethyl, 2-(1,1-Dimethylethoxy)ethyl, 2-(Methoxy)propyl, 2-(Ethoxy)propyl, 2-(n-Propoxy)propyl, 2-(1-Methylethoxy)propyl, 2-(n-Butoxy)propyl, 2-(1-Methylpropoxy)propyl, 2-(2-Methylpropoxy)propyl, 2-(1,1-Dimethylethoxy)propyl, 3-(Methoxy)propyl, 3-(Ethoxy)propyl, 3-(n-Propoxy)propyl, 3-(1-Methylethoxy)propyl, 3-(n-Butoxy)propyl, 3-(1-Methylpropoxy)propyl, 3-(2-Methylpropoxy)propyl, 3-(1,1-Dimethylethoxy)propyl, 2-(Methoxy)butyl, 2-(Ethoxy)butyl, 2-(n-Propoxy)butyl, 2-(1-Methylethoxy)butyl, 2-(n-Butoxy)butyl, 2-(1-Methylpropoxy)butyl, 2-(2-Methylpropoxy)butyl, 2-(1,1-Dimethylethoxy)butyl, 3-(Methoxy)butyl, 3-(Ethoxy)butyl, 3-(n-Propoxy)butyl, 3-(1-Methylethoxy)butyl, 3-(n-Butoxy)butyl, 3-(1-Methylpropoxy)butyl, 3-(2-Methylpropoxy)butyl, 3-(1,1-Dimethylethoxy)butyl, 4-(Methoxy)butyl, 4-(Ethoxy)butyl, 4-(n-Propoxy)butyl, 4-(1-Methylethoxy)butyl, 4-(n-Butoxy)butyl, 4-(1-Methylpropoxy)butyl, 4-(2-Methylpropoxy)butyl oder 4-(1,1-Dimethylethoxy)butyl.

Reste R⁵ sind ferner z.B. Phenoxymethyl, 2-Phenoxyethyl, 2- oder 3-Phenoxypropyl, 2- oder 4-Phenoxybutyl, Formyloxymethyl, 2-(Formyloxy)ethyl, 2- oder 3-(Formyloxy)propyl, 2- oder 4-Formyloxy)butyl, Methylcarbonyloxymethyl, 2-(Methylcarbonyloxy)ethyl, 2- oder 3-(Methylcarbonyloxy)propyl, 2- oder 4-(Methylcarbonyloxy)butyl, Ethylcarbonyloxymethyl, 2-(Ethylcarbonyloxy)ethyl, 2- oder 3-(Ethylcarbonyloxy)propyl, 2- oder 4-(Ethylcarbonyloxy)butyl, Propylcarbonyloxymethyl, 2-(Propylcarbonyloxy)ethyl, 2- oder 3-(Propylcarbonyloxy)propyl, 2- oder 4-(Propylcarbonyloxy)butyl, Cyclopentyl, Cyclohexyl, Cycloheptyl.

Die Reste R⁵ und R¹⁵ sind z.B. Formyl, Acetyl, Propionyl, Butyryl oder Isobutyryl.

Die Reste R⁵, R⁹ und R¹⁰ sind beispielsweise Mono- oder Dimethylcarbamoyl, Mono- oder Diethylcarbamoyl, Mono- oder Dipropylcarbamoyl, Mono- oder Dibutylcarbamoyl.

Reste R⁶, R⁷, R⁹ und R¹⁰ können z.B. Methoxy, Ethoxyl, Propyloxy, Isopropyloxy, Butyloxy, sec-Butyloxy, Isobutyloxy, tert-Butyloxy sein.

Die Reste R⁶ und R¹³ sind beispielsweise Formylamino, Acetylamino, Ethylcarbonylamino, Propylcarbonylamino, Isopropylcarbonylamino.

Reste T¹ sind weiterhin z.B. 2-, 3- oder 4-Fluorphenyl, 2-, 3- oder 4-Chlorphenyl, 2-, 3- oder 4-Bromphenyl, 2-, 3- oder 4-Methoxyphenyl, 2-, 3- oder 4-Nitrophenyl, 2-, 3- oder 4-Carboxylphenyl, 2-, 3- oder 4-Acetylphenyl, 2-, 3- oder 4-Acetylaminophenyl, 2-, 3- oder 4-Methylsulfonylphenyl, 2-, 3- oder 4-Sulfamoylphenyl oder 2-, 3- oder 4-carbamoylphenyl.

Die Reste R⁸, R⁹, R¹⁰ und R¹⁵ sind ferner z.B. Methoxycarbonyl, Ethoxycarbonyl, Propoxycarbonyl, Isopropoxycarbonyl, Butoxycarbonyl, Isobutoxycarbonyl, sec-Butoxycarbonyl oder tert-Butoxycarbonyl.

Der Rest R¹⁰ ist weiterhin beispielsweise Mono- oder Dimethylsulfamoyl, Mono- oder Diethylsulfamoyl, Mono- oder Dipropylsulfamoyl, Mono- oder Dibutylsulfamoyl, Methylsulfonyl, Ethylsulfonyl, Propylsulfonyl und Butylsulfonyl.

Als Reste R¹³ kommen ferner in Betracht z.B. Hydroxysulfonylphenylmethyl, 2-Hydroxysulfonylphenylethyl, 2- oder 3-Hydroxysulfonylphenylpropyl, 2- oder 4-Hydroxysulfonylphenylbutyl, Aminomethyl, 2-Aminoethyl, 2- oder 3-Aminopropyl, 2- oder 4-Aminobutyl, Hydroxysulfonylmethyl, 2-Hydroxysulfonylethyl, 2- oder 3-Hydroxysulfonylpropyl, 2- oder 4-Hydroxysulfonylbutyl, Acetylaminomethyl, 2-Acetylaminoethyl, 2- oder 3-Acetylaminopropyl, 2- oder 4-Acetylaminobutyl, Benzoylaminomethyl, 2-Benzoylaminoethyl, 2- oder 3-Benzoylaminopropyl, 2- oder 4-Benzoylaminobutyl, 2-, 3- oder 4-Carboxylphenyl, 2-, 3- oder 4-Hydroxysulfonylphenyl, 2-, 3- oder 4-Benzoylaminophenyl, 2-, 3- oder 4-Acetylaminophenyl, 2-, 3- oder 4-Methylphenyl, 2-, 3- oder 4-Methoxyphenyl, 2-, 3- oder 4-Cyanophenyl, 2-, 3- oder 4-Chlorphenyl, Phenylamino, Methylamino, Ethylamino, Propylamino, Isopropylamino, Butylamino, Isobutylamino, sec-Butylamino, tert-Butylamino oder Benzoylamino.

Im folgenden werden beispielhaft Kupplungskomponenten KH aufgeführt. Im einzelnen sind beispielsweise als Naphtholsulfonsäuren 1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-trisulfonsäure, 1,8-Dihydroxynaphthalin-3,6-disulfonsäure, 2,6-Dihydroxynapthalin-8-sulfonsäure oder 2,8-Dihydroxynaphthalin-6-sulfonsäure zu nennen.

Weiterhin sind beispielsweise 1-Naphthylamin, N-Phenyl-1-naphthylamin, N-Ethyl-1-naphthylamin, N-Phenyl-2-naphthylamin, 1-Naphthol, 2-Naphthol, 1,5-Dihydroxynaphthalin, 1,6-Dihydroxynaphthalin, 1,7-Dihydroxynaphthalin oder 2,7-Dihydroxynaphthalin zu nennen.

Aminonaphthalinsulfonsäuren sind beispielsweise 1-Naphthylamin-6-sulfonsäure, 1-Naphthylamin-7-sulfonsäure, 1-Naphthylamin-8-sulfonsäure, 2-Naphthylamin-3,6-disulfonsäure, 2-Naphthylamin-5,7-disulfonsäure, 2-Naphthylamin-6,8-disulfonsäure oder 2-Hydroxysulfonylmethylaminonaphthalin-5-sulfonsäure.

Als Aminonaphtholsulfonsäuren sind z.B. 1-Amino-5-hydroxynaphthalin-7-sulfonsäure, 1-Amino-8-hydroxynaphthalin-4-sulfonsäure, 1-Amino-8-hydroxynaphthalin-2,4-disulfonsäure, 1-Amino-8-hydroxynaphthalin-3,6-disulfonsäure, 1-Amino-8-hydroxynaphthalin-4,6-disulfonsäure, 2-Amino-5-hydroxy-naphthalin-7-sulfonsäure, 2-Amino-8-hydroxynaphthalin-3,6-disulfonsäure, 2-Amino-5-hydroxynaphthalin-1,7-disulfonsäure, 2-Amino-7-hydroxysulfonylmethyl-8-hydroxynaphthalin-3,6-disulfonsäure, 2-Amino-7-hydroxysulfonylmethyl-8-hydroxynaphthalin-6-sulfonsäure, 1-Acetylamino-8-hydroxyziaphthalin-3,6-disulfonsäure, 1-Benzoylamino-8-hydroxynaphthalin-3,6-disulfonsäure, 1-Acetylamino-8-hydroxynaphthalin-4,6-disulfonsäure, 1-Benzoylamino-8-hydroxynaphthalin-4,6-disulfonsäure, 1-Acetylamino-5-hydroxynaphthalin-7-sulfonsäure, 2-Methylamino-8-hydroxynaphthalin-6-sulfonsäure, 2-Hydroxysulfonylmethylamino-7-hydroxysulfonylmethyl-8-hydroxynaphthalin-6-sulfonsäure oder 2-(3'-oder 4'-Hydroxysulfonylphenylamino)-8-hydroxynaphthalin-6-sulfonsäure zu nennen.

Geeignete Kupplungskomponenten sind außerdem 2-Acetylamino-5-hydroxynaphthalin-7-sulfonsäure und 2-Acetylamino-8-hydroxynaphthalin-6-sulfonsäure.

Als Benzol-Kupplungskomponenten sind beispielsweise o- oder m-Toluidin, o- oder m-Anisidin, Kresidin, 2,5-Dimethylanilin, 2,5-Dimethoxyanilin, m-Aminoacetanilid, 3-Amino-4-methoxyacetanilid, 3-Amino-4-methylacetanilid, m-Aminophenylharnstoff, N-Methylanilin, N-Methyl-m-toluidin, N-Ethylanilin, N-Ethyl-m-toluidin, N-(2-Hydroxyethyl)anilin oder N-(2-Hydroxyethyl)-m-toluidin zu nennen.

Als Pyrazolon-Kupplungskomponenten sind beispielsweise 3-Methyl-, 3-Carboxy- oder 3-(C₁-C₄-Alkoxycarbonyl)pyrazol-5-one zu nennen, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Hydroxysulfonyl, Acetylamino, Nitro, Hydroxyl, Carboxyl, Carbamoyl oder Sulfamoyl substituiertes Phenyl oder durch Hydroxysulfonyl substituiertes 1- oder 2-Naphthyl tragen können. Beispielsweise sind 1-Phenyl-, 1-(2'-Chlorphenyl)-, 1-(2'-Methoxyphenyl)-, 1-(2'Methylphenyl)-, 1-(1',5'-Dichlorphenyl)-, 1-(2',6'-Dichlorphenyl)-, 1-(2'- Methyl-6'-chlorphenyl)-, 1-(2'-Methoxy-5'-methylphenyl)-, 1-(2'-Methoxy-5'-hydroxysulfonylphenyl)-, 1-(2',5'-Dichlor-4'-hydroxysulfonylphenyl)-,1-(2',5'-Dihydroxysulfonylphenyl)-, 1-(2'-Carboxyphenyl)-, 1-(3'-Hydroxysulfonylphenyl)-, 1-(4'-Hydroxysulfonylphenyl)- oder 1-(3'-Sulfamoylphenyl)-3-carboxylpyrazol-5-on, 1-(3'- oder 4'-Hydroxysulfonylphenyl)-, 1-(2'-Chlor-4'- oder -5'-hydroxysulfonylphenyl)-, 1-(2'-Methyl-4'-hydroxysulfonylphenyl)-, 1-(2',5'-Dichlorphenyl)-, 1-(4',8'-Dihydroxysulfonyl-1-naphthyl)-, 1-(6'-Hydroxysulfonyl-1-naphthyl)-3-methylpyrazol-5-on, 1-Phenylpyrazol-5-on-3-carbonsäureethylester, Pyrazol-5-on-3-carbonsäureethylester oder Pyrazol-5-on-3-carbonsäure zu nennen.

Andere aus der Pyrazolreihe stammende Kupplungskomponenten sind beispielsweise 1-Methyl-, 1-Ethyl-, 1-Propyl-, 1-Butyl-, 1-Cyclohexyl-, 1-Benzyl- oder 1-Phenyl-5-aminopyrazol, 1-(4'-Chlorphenyl)-, 1-(4'-Methylphenyl)-5-aminopyrazol oder 1-Phenyl-3-methyl-5-aminopyrazol.

N-Arylacetoacetamide sind vor allem Acetessiganilid oder dessen im Phenylkern durch Chlor, Methyl, Ethyl, Methoxy, Ethoxy, Acetylamino, Hydroxysulfonyl, Carboxyl, Carbamoyl oder Sulfamoyl ein- oder mehrfach substituierte Derivate.

Vom Pyridin abgeleitete Kupplungskomponenten sind beispielsweise die in der DE-A-2 260 827 beschriebenen Derivate.

Als Pyrimidinkupplungskomponenten sind z. B. die in der DE-A-2 202 820, DE-A-2 308 663 oder DE-A-3 119 349 aufgeführten Verbindungen geeignet. Weiterhin sind Barbitursäure und deren N-Substitutionsprodukte zu nennen. Als N-Substituenten kommen dabei insbesondere C₁-C₄-Alkyl oder Phenyl in Betracht.

Als Indolkupplungskomponenten sind beispielsweise 2-Methylindol, 2-Phenylindol, 2-Phenylindol-5-sulfonsäure, 1-Methyl-2-phenylindol, 1-(2'-Hydroxyethyl)-, 1-(2'-Carboxyethyl)-, 1-(2'Carbamoylethyl)-2-methylindol oder -2-phenylindol zu nennen.

Als Pyridonkupplungskomponenten sind beispielsweise 1-Ethyl-2-hydroxy-4-methyl-5-carbamoylpyrid-6-on, 1-(2'Hydroxyethyl)-2-hydroxy-4-methyl-5-carbamoylpyrid-6-on, 1-Phenyl-2-hydroxy-4-methyl-5-carbamoylpyrid-6-on, 1-Ethyl-2-hydroxy-4-methyl-5-cyanopyrid-6-on, 1-Ethyl-2-hydroxy-4-methyl-5-hydroxysulfonylmethylpyrid-6-on, 1-Methyl-2-hydroxy-4-methyl-5-cyanopyrid-6-on, 1-Methyl-2-hydroxy-5-acetylpyrid-6-on, 1,4-Dimethyl-2-hydroxy-5-cyanopyrid-6-on, 1,4-Dimethyl-5-carbamoylpyrid-6-on, 2,6-Dihydroxy-4-ethyl-5-cyanopyridin, 2-Hydroxy-4-ethyl-5-carbamoylpyrid-6-on, 1-Ethyl-2-hydroxy-4-methyl-5-hydroxysulfonylmethylpyrid-6-on, 1-Methyl-2-hydroxy-4-methyl-5-methylsulfonylpyrid-6-on oder 1-Carboxyethyl-2-hydroxy-4-ethyl-5-phenylsulfonylpyrid-6-on zu nennen.

Faserreaktivgruppenhaltige Kupplungskomponenten KH sind beispielsweise Verbindungen der Formeln III a - j 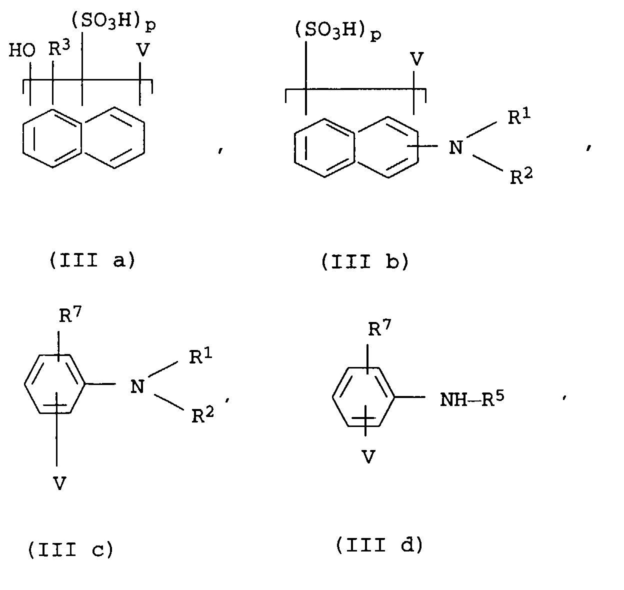 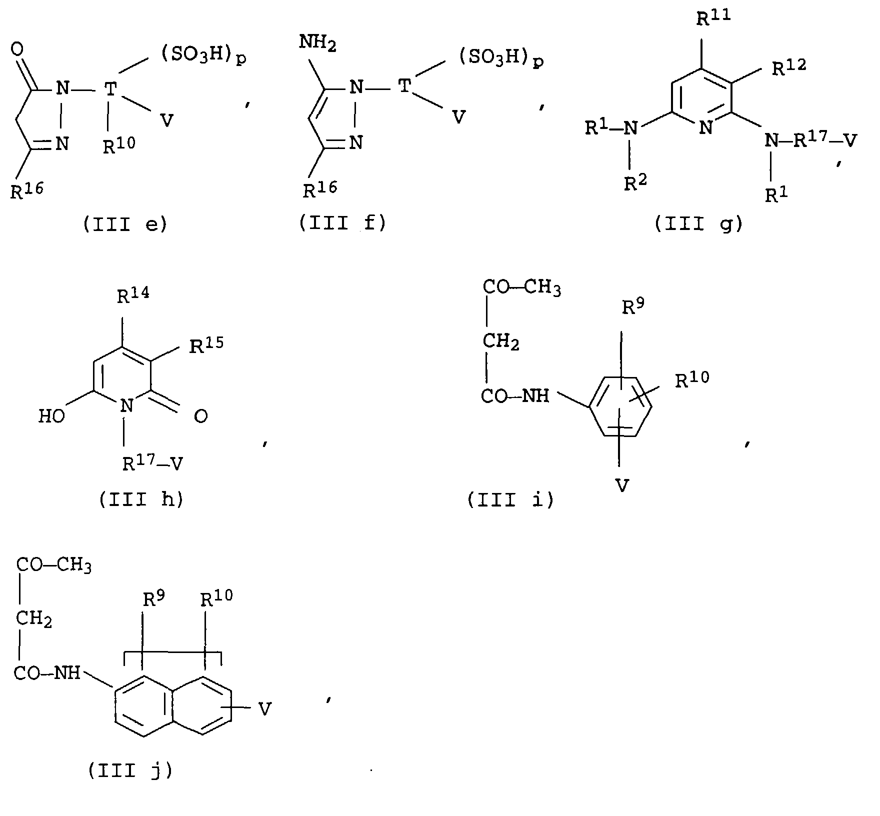 worin
- V: für einen faserreaktiven Rest der aliphatischen Reihe,
- R¹⁶: für Methyl, Carboxyl, C₁-C₄-Alkoxycarbonyl oder Phenyl und
- R¹⁷: für C₁-C₆-Alkylen stehen und
R^{1,} R^{2,} R³, R⁵, R⁷, R⁹, R¹⁰, R¹¹, R¹², R¹⁴, R¹⁵ und T jeweils die obengenannte Bedeutung besitzen.

Faserreaktive Reste V tragende Pyrazolonkupplungskomponenten leiten sich beispielsweise von folgenden Pyrazolonen ab: 1-(3'- oder 4'-Aminophenyl)-, 1-(2'-Hydroxysulfonyl-5'-aminophenyl)- oder 1-(2'-Methoxy-5'-aminophenyl)-3-carboxylpyrazol-5-on, 1-(3'- oder 4'-Aminophenyl)- oder 1-(6'-Amino- 4',8'-dihydroxysulfonylnaphth-2'-yl)-3-carboxylpyrazol-5-on.

Alle in den obengenannten Formeln II und III auftretenden Alkyl- oder Alkylengruppen können sowohl geradkettig als auch verzweigt sein.

Bevorzugt werden Reaktivfarbstoffe, deren Kupplungskomponente faserreaktivgruppenfrei ist.

Bevorzugt werden außerdem Reaktivfarbstoffe mit einer Kupplungskomponente aus der Naphthalinreihe. Von besonderer Bedeutung sind als Kupplungskomponenten Aminonaphthalinsulfonsäuren, vor allem 2-Aminonaphthalinsulfonsäuren. Diese weisen insbesondere gute Eigenschaften auf, wenn sie in 1-Position gekuppelt werden. Aus dieser Gruppe sind Reaktivfarbstoffe der allgemeinen Formel IV 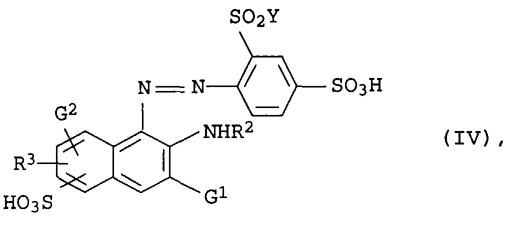 in der
- Y: Vinyl oder einen Rest der Formel C₂H₄Q, worin Q für eine unter alkalischen Reaktionsbedingungen abspaltbare Gruppe steht,
- R²: Wasserstoff, C₁-C₄-Alkyl, das durch Hydroxy, Cyano, Carboxyl, Hydroxysulfonyl, Sulfato, Methoxycarbonyl, Ethoxycarbonyl oder Acetoxy substituiert sein kann, Benzyl oder Phenyl, das durch C₁-C₄-Alkyl, C₁-C₄-Alkoxy, Chlor oder Hydroxysulfonyl substituiert sein kann,
- R³: Wasserstoff oder C₁-C₄-Alkyl, das durch Hydroxysulfonyl oder Carboxyl substituiert sein kann,
- G¹: Wasserstoff oder Hydroxysulfonyl und
- G²: Wasserstoff oder Hydroxy bedeuten,
vorteilhaft.

Bevorzugt sind Reaktivfarbstoffe der allgemeinen Formel IV, in der R² für C₁-C₄-Alkyl, das durch Hydroxysulfonyl oder Carboxyl substituiert ist, insbesondere für Hydroxysulfonylmethyl oder Carboxymethyl steht.

Bevorzugte Reaktivfarbstoffe sind auch Verbindungen der allgemeinen Formel IV, in der R³ C₁-C₄-Alkyl, das durch Hydroxysulfonyl oder Carboxyl substituiert ist, insbesondere Hydroxysulfonylmethyl oder Carboxymethyl bedeutet.

Ebenfalls bevorzugt werden Reaktivfarbstoffe der allgemeinen Formel IV, in der G² für Wasserstoff steht.

Ebenfalls bevorzugt werden Reaktivfarbstoffe der allgemeinen Formel V 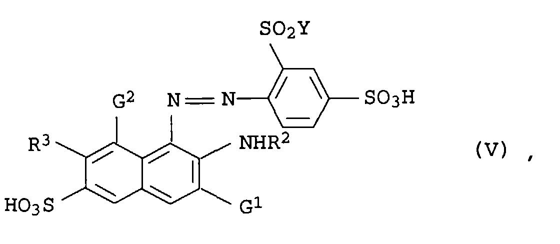 in der Y, R², R³, G¹ und G² die oben angegebene Bedeutung haben.

Daneben werden Verbindungen der Formeln I und IV bevorzugt, in denen die Substituenten aus einer Kombination der oben aufgeführten bevorzugten Substituenten und Formeln ausgewählt sind.

Die Herstellung der neuen Reaktivfarbstoffe der Formel I kann nach an sich bekannten Methoden durch Azokupplung erfolgen.

Beispielsweise kann man ein Anilin der Formel VI 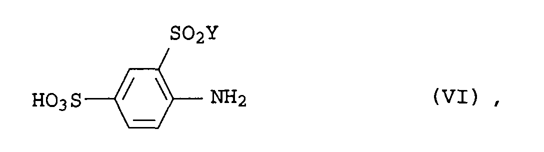 in der Y die obengenannte Bedeutung besitzt, auf an sich bekannten Wegen diazotieren und das resultierende Diazoniumsalz mit einer Kupplungskomponente der Formel VII

HK (VII)

, worin K die obengenannte Bedeutung besitzt, kuppeln.

Die bevorzugten Reaktivfarbstoffe der Formel IV werden durch Kupplung in einem pH-Bereich von 1-4 erhalten. Die hierfür als Kupplungskomponente gegebenenfalls benötigten N-substituierten Aminonaphthaline werden nach allgemein bekannten Methoden erhalten.

Beispielsweise kann man ein Naphthalinderivat der Formel VIII, wie auch in der älteren Patentanmeldung DE-A 19 600 765 beschrieben, 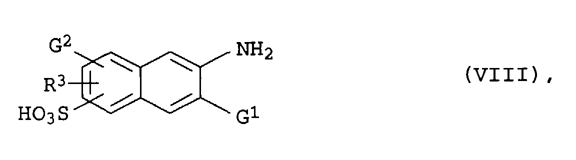 in der G^{1,} G² und R³ jeweils die obengenannte Bedeutung besitzen, in Gegenwart eines Alkalisulfits, z.B. Natrium- oder Kaliumsulfit, mit einem Amin H₂NR^{2,} in dem R² die obengenannte Bedeutung besitzt, zur Reaktion bringen.

Die Substitution mit Carboxyalkyl oder Hydroxysulfonylalkyl ist allgemein bekannt und erfolgt, wie beispielsweise in der älteren Patentanmeldung DE-A 19 600 765 beschrieben.

Die neuen Reaktivfarbstoffe der Formel I eignen sich in vorteilhafter Weise zum Färben oder Bedrucken von Hydroxygruppen oder Stickstoffatome aufweisenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sich die neuen Farbstoffe zum Färben und Bedrucken von Textilmaterial auf der Basis von Wolle oder insbesondere von Baumwolle.

Insbesondere auf Substraten auf Basis von Cellulose werden farbstarke Färbungen mit sehr hoher Fixierausbeute erhalten, die eine sehr gute Lichtechtheit sowie vorzügliche Naßechtheiten, wie Wasch-, Chlorbleich-, Peroxidbleich-, Alkali-, Meerwasser- oder Schweißechtheit, aufweisen.

Die folgenden Beispiele sollen die Erfindung näher erläutern.

### Beispiel 1a

472,5 g (3 mol) 1-Chlor-2-nitrobenzol wurden in 300 ml N,N-Dimethylacetamid gelöst und bei 35°C mit 248,8 g (1,8 mol) Kaliumcarbonat versetzt. Innerhalb von 6 Stunden wurden bei 35 - 40°C 251 g (3,6 mol) Mercaptoethanol zugetopft. Anschließend wurde 5 Stunden auf 80°C erhitzt. Die Reaktionslösung wurde in 2500 ml Wasser gegossen, und das Produkt wurde abfiltriert und mit Wasser gewaschen. Man erhielt 659 g einer feuchten Paste folgender Struktur:

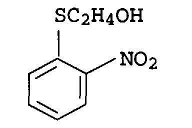

### Beispiel 1b

421 g der unter 1a hergestellten Verbindung wurden in 1000 ml Wasser gelöst, mit Eisessig auf einen pH-Wert von 5 bis 5,5 eingestellt und mit 2 g Natriumwolframat versetzt. Bei 80°C wurden langsam 317 ml 30 Gew.-%ige wäßrige Wasserstoffperoxidlösung zugetropft und nach vollständiger Zugabe 8 Stunden bei 90°C gerührt. Nach Abkühlen auf Raumtemperatur wurde das Produkt filtriert und mit Wasser gewaschen. Man erhielt 231 g einer feuchten Paste folgender Struktur:

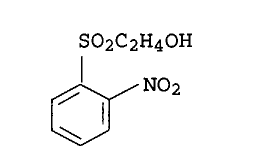

### Beispiel 1c

231 g der unter 1b hergestellten Verbindung wurden in 1600 ml Isopropanol gelöst, mit 1 g Palladium auf Kohle (10 Gew.-%) und 2 ml Eisessig versetzt und bei 60°C 12 h mit Wasserstoff begast. Nach Abfiltrieren des Katalysators und Abdestillieren des Lösungsmittels unter vermindertem Druck wurden 220 g eines Öls folgender Struktur erhalten:

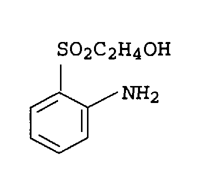

### Beispiel 1d

In 600 ml 100%ige Schwefelsäure wurden unter Kühlung bei 35 - 40°C 220 g (1 mol) der unter 1c hergestellten Verbindung eingetragen und über Nacht bei Raumtemperatur geführt. Die Reaktionsmischung wurde auf 900 g Eis gefällt. Nach Filtration und Trocknung wurden 237 g (0,79 mol) des Produktes folgender Struktur erhalten:

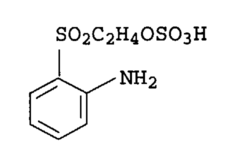

### Beispiel 1e

33 g (0,1 mol) der unter 1d hergestellten Verbindung wurden in 40 ml 100%iger Schwefelsäure gelöst, bei 100°C mit 40 ml 24 Gew.-%igem Oleum versetzt und 9 Stunden auf 120°C erhitzt. Nach Austragen der Reaktionslösung auf Eis und Aussalzen mit 50 g Kaliumchlorid wurden nach Filtration und Trocknung 65 g (0,09 mol) der Verbindung folgender Struktur erhalten: 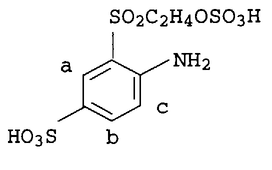 [Gesamtausbeute ausgehend von 1-Chlor-2-nitrobenzol: 71 %]
- ¹H-NMR (400 MHz, D₂SO₄):: 0,33 (s, 2H), 1,09 (s, 2H), 4,31(d, 1H, H_{c}), 4,80 (d, 1H, H_{b}), 4,94 (s, 1H, Hₐ) ppm.
- ¹³C-NMR (100 MHz, D₂SO₄):: 55.5, 63.4, 128.1, 129.7, 130.3, 131.9, 135.0, 141.3 ppm.

### Beispiel 2

36 g (0,05 mol) der unter 1e hergestellten Verbindung wurden in 200 ml Eiswasser angerührt, mit 20 ml 10 N Salzsäure versetzt und unter Rühren bei einer Temperatur von 0 - 5°C durch Zutropfen von 15 ml 23 Gew.-%iger wäßriger Natriumnitritlösung diazotiert. Nach 2stündigem Rühren bei 0 - 5°C wurde der geringe Überschuß an salpetriger Säure mit Amidosulfonsäure zerstört. Zu dieser Lösung wurden bei einer Temperatur von 0 bis 5°C 20,7 g (0,05 mol) 2-Amino-8-hydroxy-3,6-disulfonsäure gegeben und die Reaktionslösung mit Natriumacetat bei einem pH-Wert von 2,5 bis 3 gehalten. Nach Beendigung der Reaktion ließ man auf Raumtemperatur erwärmen und stellte den pH-Wert mit Natriumcarbonat auf 5 bis 5,5 ein.

Durch Zugabe von 100 g Kaliumchlorid wurde das Produkt ausgefällt und 41,6 g (0,046 mol) eines roten Farbstoffs der Formel 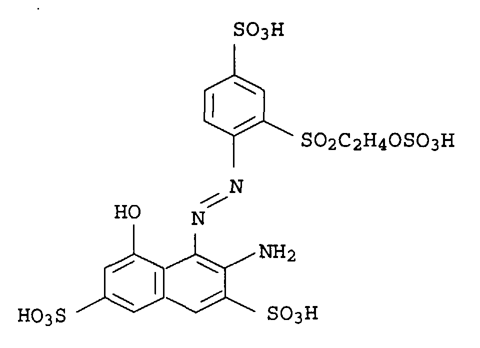 erhalten. λ_{max.}(Wasser) = 534 nm

Analog zu Beispiel 2 wurden die im folgenden aufgeführten Farbstoffe erhalten:

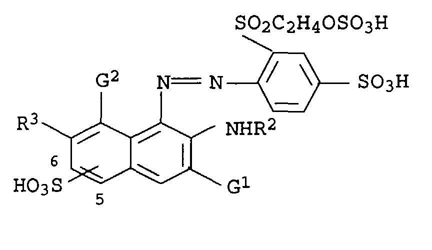

| Bei-spiel | R² | G¹ | R³ | G² | Position der SO₃H-Gruppe | λmax (Wasser) [nm] |
|---|---|---|---|---|---|---|
| 3 | H | H | H | H | 5 | 498 |
| 4 | H | H | H | H | 6 | 498 |
| 5 | CH₂SO₃H | H | CH₂SO₃H | OH | 6 | 558 |
| 6 | CH₂SO₃H | H | H | H | 5 | 514 |
| 7 | H | SO₃H | CH₂SO₃H | OH | 6 | 544 |
| 8 | H | H | CH₂SO₃H | OH | 6 | 540 |

### Beispiel 9

Ebenfalls analog zu Beispiel 2 wurde der folgende Farbstoff erhalten: 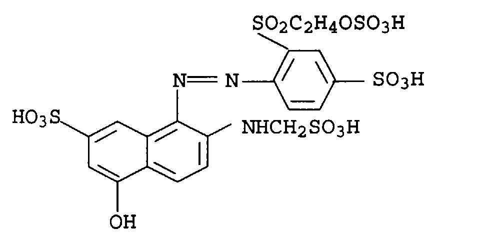 λₘₐₓ (Wasser) = 526 nm

## Patentansprüche

1. Reaktivfarbstoffe der allgemeinen Formel I 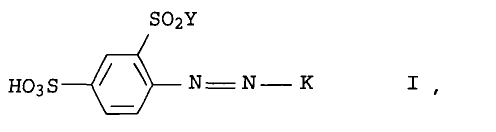 in der
Y Vinyl oder einen Rest der Formel C₂H₄Q, worin Q für eine unter alkalischen Reaktionsbedingungen abspaltbare Gruppe steht, und
K den Rest einer Kupplungskomponente ohne heterocyclischen Ankerrest bedeutet,
mit der Maßgabe, daß 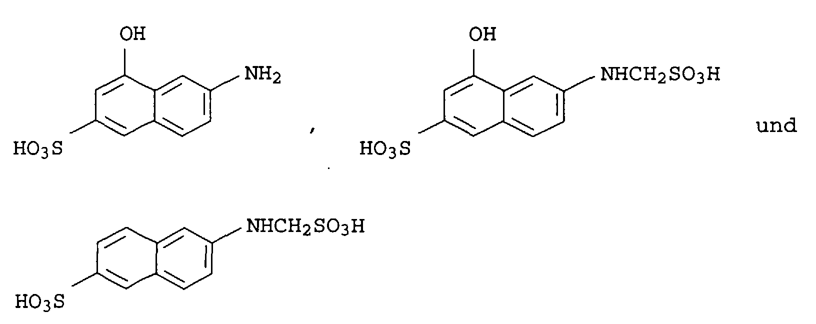 als Kupplungskomponenten ausgeschlossen sind.

2. Reaktivfarbstoffe nach Anspruch 1, dadurch gekennzeichnet, daß K eine faserreaktivgruppenfreie Kupplungskomponente ist.

3. Reaktivfarbstoffe nach Anspruch 1, dadurch gekennzeichnet, daß K eine Kupplungskomponente aus der Benzol-, Naphthalin-, Pyrazol-, Pyridin-, Pyrimidin-, Indol- oder N-Arylacetoacetamidreihe ist.

4. Reaktivfarbstoffe nach Anspruch 1, dadurch gekennzeichnet, daß K eine Kupplungskomponente aus der Naphthalinreihe ist.

5. Reaktivfarbstoffe nach Anspruch 1, die der allgemeinen Formel IV 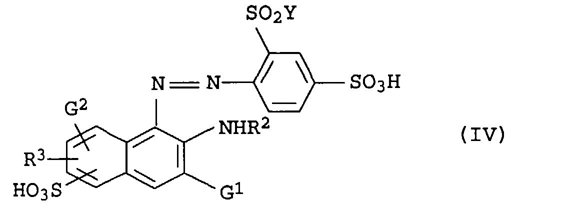 gehorchen, in der
Y Vinyl oder einen Rest der Formel C₂H₄Q, worin Q für eine unter alkalischen Reaktionsbedingungen abspaltbare Gruppe steht,
R² Wasserstoff, C₁-C₄-Alkyl, das durch Hydroxy, Cyano, Carboxyl, Hydroxysulfonyl, Sulfato, Methoxycarbonyl, Ethoxycarbonyl oder Acetoxy substituiert sein kann, Benzyl oder Phenyl, das durch C₁-C₄-Alkyl, C₁-C₄-Alkoxy, Chlor oder Hydroxysulfonyl substituiert sein kann,
R³ Wasserstoff oder C₁-C₄-Alkyl, das durch Hydroxysulfonyl oder Carboxyl substituiert sein kann,
G¹ Wasserstoff oder Hydroxysulfonyl und
G² Wasserstoff oder Hydroxy bedeuten.

6. Reaktivfarbstoffe nach Anspruch 5, die der allgemeinen Formel V 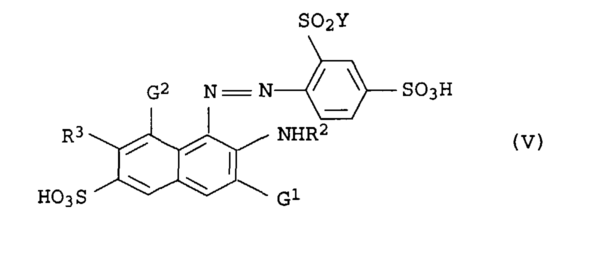 gehorchen.

7. Reaktivfarbstoffe nach Anspruch 5, dadurch gekennzeichnet, daß R² C₁-C₄-Alkyl, das durch Hydroxysulfonyl oder Carboxyl substituiert ist, bedeutet.

8. Reaktivfarbstoffe nach Anspruch 5, dadurch gekennzeichnet, daß G² Wasserstoff bedeutet.

9. Reaktivfarbstoffe nach Anspruch 1, dadurch gekennzeichnet, daS Y Vinyl oder einen Rest der Formel -C₂H₄OSO₃H, -C₂H₄SSO₃H, -C₂H₄Cl oder -C₂H₄OCOCH₃ bedeutet.

10. Verwendung der Reaktivfarbstoffe gemäß Anspruch 1 zum Färben oder Bedrucken von Hydroxygruppen oder Stickstoffatome aufweisenden organischen Substraten.
